# EUROPÄISCHE PATENTANMELDUNG

(11) **EP 3 108 744 A1**
(43) Veröffentlichungstag der Anmeldung: **28.12.2016**
(21) Anmeldenummer: 16172731.8
(22) Anmeldetag: 02.06.2016
(51) Int. Cl.: A01G 9/02

(54) **PFLANZANORDNUNG**

(30) Priorität: 23.06.2015 DE 102015211534
(71) Anmelder: Gernert GmbH, 97447 Gerolzhofen (DE)
(72) Erfinder: Gernert, Joachim, 97513 Michelau im Steigerwald (DE)
(74) Vertreter: Rau, Schneck & Hübner Patentanwälte Rechtsanwälte PartGmbB

(57) **Zusammenfassung**

Die Erfindung betrifft eine Pflanzanordnung mit mindestens einem Pflanzbehältnis (1), das eine obere Pflanzöffnung (13) und einen von der Pflanzöffnung (13) ausgehenden Pflanzraum (12) zum Aufnehmen von einem Pflanztopf (27) mit einer Pflanze (29) aufweist. Ferner hat das mindestens eine Pflanzbehältnis (1) mindestens eine Pflanzenwurzel-Öffnung (8) zur Durchsetzung von mindestens einer Wurzel (35) der Pflanze (29). Die Pflanzanordnung umfasst außerdem eine, an dem mindestens einen Pflanzbehältnis (1) benachbart zu dessen Pflanzöffnung (13) einstückig angeformte, die Pflanzöffnung (13) umgebende und nach seitlich außen vorspringende Öffnungsrandzone (15), die eine Unterseite (18) aufweist. An der Unterseite (18) der Öffnungsrandzone (15) ist mindestens eine Kondenswasser-Führungszone (21) aufgebildet, die gegenüber einer Pflanzanordnungs-Aufstellebene (7) zur Fühning von Kondenswasser (31) von der mindestens einen Kondenswasser-Führungszone (21) zu der Außenseite (11) der Seitenwandung (5) zur Weiterleitung des Kondenswassers (31) nach unten in Richtung auf die mindestens eine Pflanzenwurzel-Öffnung (8) zur Versorgung der Pflanze (29) mit dem Kondenswasser (31) geneigt ist.

## Beschreibung

Die Erfindung betrifft eine Pflanzanordnung mit mindestens einem Pflanzbehältnis. In jedem Pflanzbehältnis ist ein, insbesondere genau ein, Pflanztopf mit einer in diesen eingesetzten Pflanze aufnehmbar.

Gattungsgemäße Pflanzanordnungen sind aus dem Stand der Technik allgemein bekannt. Sie dienen im Allgemeinen zur Anzucht bzw. Aufzucht von Pflanzen.

Beispielsweise offenbaren die DE 198 44 020 C2, DE 298 17 249 U1, EP 0 988 783 B1, DE 94 07 266 U1, EP 1 346 628 B1 und DE 102 11 723 C1 gattungsgemäße Kulturplatten bzw. Pflanzpaletten zum Bewurzeln von Jungpflanzen.

Der Erfindung liegt die Aufgabe zugrunde, eine Pflanzanordnung bereitzustellen, die eine äußerst wirtschaftliche Anzucht bzw. Aufzucht von Pflanzen erlaubt. Insbesondere soll die Pflanzanordnung einen besonders niedrigen Bedarf an Gießwasser bzw. Niederschlagswasser haben. Die Pflanzanordnung soll außerdem ein sehr gutes und gleichmäßiges Wachsen der Pflanzen gewährleisten.

Diese Aufgabe wird erfindungsgemäß durch die in dem unabhängigen Anspruch 1 angegebenen Merkmale gelöst. Der Kern der Erfindung liegt darin, eine Pflanzanordnung derart auszubilden, dass diese im Stande ist, Kondenswasser zu nutzen. Bei dem Kondenswasser handelt es sich insbesondere um Tau.

Wenn sich die Pflanzanordnung im Einsatz befindet, schlägt sich das Kondenswasser insbesondere unten an der jeweiligen Öffnungsrandzone nieder. Das Kondenswasser schlägt sich im Allgemeinen an der jeweiligen Öffnungsrandzone nieder, sobald wasserdampfhaltige Luft dort unter den Taupunkt abgekühlt wird. Das Kondenswasser wird so quasi von der Pflanzanordnung zurückgehalten und dann der mindestens einen aufgenommenen Pflanze zugeführt, was den Bedarf an Gießwasser erheblich reduziert und so besonders wirtschaftlich ist.

Die Unterseite der Öffnungsrandzone, also die einem Untergrund bzw. Kulturboden zugewandte Seite der Öffnungsrandzone, ist dazu im Stande, das Kondenswasser zu der Seitenwandung hin zu führen. Dazu hat die mindestens eine Kondenswasser-Führungszone mindestens einen gegenüber der Pflanzanordnungs-Aufstellebene entsprechend gekrümmten und/oder schräg verlaufenden Bereich.

Das Kondenswasser läuft dann außenseitig an der Seitenwandung entlang nach unten in Richtung auf die mindestens eine Pflanzenwurzel-Öffnung. Es kann direkt oder auf Umwegen in Richtung auf die mindestens eine Pflanzenwurzel-Öffnung entlang der Seitenwandung laufen.

Die sich in dem Pflanzraum befindende Pflanze ist so beispielsweise im Stande, das an der Seitenwandung nach unten gelaufene Kondenswasser über ihre Wurzel/n im Bereich der mindestens einen Pflanzenwurzel-Öffnung aufzunehmen. Insbesondere ist die Pflanze im Stande, außerhalb des Pflanzraums das Kondenswasser aufzunehmen, wenn deren Wurzel die mindestens eine Pflanzwurzel-Öffnung durchsetzt und so sich auch außerhalb des Pflanzraums, insbesondere nach seitlich außen, erstreckt. Günstigerweise wird zusätzlich das Kondenswasser über Kapillarwirkung über die mindestens eine Pflanzenwurzel-Öffnung in den jeweiligen Pflanzraum gesaugt und in dem Pflanzraum von der Pflanze über deren Wurzel aufgenommen.

Die Pflanzanordnung ist insbesondere paneelartig und/oder palettenartig.

Es ist von Vorteil, wenn die Pflanzanordnung einteilig ausgeführt ist. Insbesondere ist die Pflanzanordnung aus einem Kunststoffmaterial, insbesondere Polypropylen oder Polystyrol, gebildet. Vorzugsweise ist die Pflanzanordnung ein tiefgezogenes oder spritzgegossenes Kunststoffteil. Es ist zweckmäßig, wenn die Pflanzanordnung eine im Wesentlichen einheitliche Dicke hat. Insbesondere hat die Pflanzanordnung eine glatte Oberfläche.

Günstigerweise ist die Pflanzanordnung stapelbar.

Das mindestens eine Pflanzbehältnis ist günstigerweise im Querschnitt ringförmig. Vorzugsweise ist es kegelstumpfförmig oder zylindrisch ausgebildet. Alternativ hat das mindestens eine Pflanzbehältnis eine eckige, insbesondere rechteckige, Kontur. Andere Formen sind möglich.

Es ist von Vorteil, wenn jedes Pflanzbehältnis genau eine Pflanzenwurzel-Öffnung hat. Es ist zweckmäßig, wenn diese Pflanzenwurzel-Öffnung zentral in dem Pflanzbehältnis angeordnet ist. Vorzugsweise befindet sich die Pflanzenwurzel-Öffnung in einem Bodenbereich des mindestens einen Pflanzbehältnisses.

Die Pflanzanordnungs-Aufstellebene ist günstigerweise durch einen Boden der Pflanzanordnung bzw. des mindestens einen Pflanzbehältnisses gebildet. Sie verläuft im Einsatz der Pflanzanordnung günstigerweise horizontal.

Die obere Pflanzöffnung ist nach oben gewandt.

Es ist von Vorteil, wenn die Öffnungsrandzone die jeweilige Pflanzöffnung vollständig umgibt.

Es ist vorteilhaft, wenn die Pflanzanordnung bezüglich mindestens einer Symmetrieebene im Wesentlichen symmetrisch ausgebildet ist. Günstigerweise ist das mindestens eine Pflanzbehältnis bezüglich mindestens einer Symmetrieebene im Wesentlichen symmetrisch.

Weitere vorteilhafte Ausgestaltungen der Erfindung sind in den Unteransprüchen angegeben.

Der mindestens eine Kondenswasser-Führungsflügel gemäß dem Unteranspruch 2 ist im Stande, besonders wirkungsvoll das Kondenswasser aufzufangen und zu der Seitenwandung zu führen. Der mindestens eine Kondenswasser-Führungsflügel schließt sich günstigerweise über einen Großteil der Seitenwandung, insbesondere direkt, an diese an. Es ist von Vorteil, wenn jedem Pflanzbehältnis mehrere Kondenswasser-Führungsflügel zugeordnet sind und diese nebeneinander angeordnet sind.

Mit der Ausgestaltung gemäß dem Unteranspruch 3 ist besonders viel Kondenswasser auffangbar. Bei der eckigen Außenkontur handelt es sich insbesondere um eine fiktive bzw. imaginäre Außenkontur. Die die Außenkontur bildende Seitenränder der Öffnungsrandzone können innenliegende oder außenliegende Ränder der Pflanzanordnung sein.

Die in dem Unteranspruch 4 angegebene Gestalt bzw. Form des mindestens einen Kondenswasser-Führungsflügels erlaubt eine besonders gute bzw. gezielte Führung des Kondenswassers zu der Seitenwandung. Ferner ist eine derartige Pflanzanordnung einfach und kostengünstig herstellbar. Vorzugsweise ist der mindestens eine Kondenswasser-Führungsflügel bezüglich der Pflanzanordnungs-Aufstellebene zumindest bereichsweise konvex gekrümmt. Alternativ liegt eine konkave Krümmung vor.

Die mindestens eine Kondenswasser-Führungsflanke gemäß dem Unteranspruch 5 erlaubt eine besonders gute und sichere Führung des Kondenswassers. Es ist von Vorteil, wenn die mindestens eine Kondenswasser-Führungsflanke die Pflanzöffnung im Wesentlichen vollständig umgibt. Bei der mindestens einen Kondenswasser-Führungsflanke verläuft die Öffnungsrandzone im Wesentlichen schräg zu der Pflanzanordnungs-Aufstellebene.

Bei der Pflanzanordnung gemäß dem Unteranspruch 6 erfolgt eine kontrollierte Übergabe des Kondenswassers von der mindestens einen Kondenswasser-Führungsflanke an die Seitenwandung. Es ist so besonders viel Kondenswasser auffangbar.

Die Ausgestaltung gemäß dem Unteranspruch 7 erlaubt eine gleichmäßige Führung des Kondenswassers über die mindestens eine Kondenswasser-Führungsflanke zu der Seitenwandung.

Die untere Knickstelle gemäß dem Unteranspruch 8 gewährleistet eine besonders sichere und einfache Übergabe des Kondenswassers an die Seitenwandung. Es ist von Vorteil, wenn die mindestens eine Kondenswasser-Führungsflanke im Bereich der unteren Knickstelle unter Bildung eines stumpfen Winkels verläuft, der bevorzugt nach oben offen ist.

Die in dem Unteranspruch 9 angegebene Orientierung der mindestens einen Kondenswasser-Führungsflanke führt wieder zu einer äußerst sicheren und gezielten Führung des Kondenswassers zu der Seitenwandung.

In dem Unteranspruch 10 ist eine bevorzugte Breite der mindestens einen Kondenswasser-Führungsflanke angegeben. Eine derart dimensionierte Kondenswasser-Führungsflanke erlaubt zum einen eine platzsparende Pflanzanordnung und zum anderen ein sicheres Auffangen des Kondenswassers.

Die Ausgestaltung gemäß dem Unteranspruch 12 führt einerseits zu einer gezielten und sicheren Übergabe des Kondenswassers an die Seitenwandung. Andererseits sind derartige Pflanzanordnungen besonders gut und platzsparend übereinander stapelbar.

Die Dimensionierung der mindestens einen Pflanzenwurzel-Öffnung gemäß dem Unteranspruch 14 erlaubt ein einfaches und sicheres Durchsetzen durch mindestens eine Wurzel der aufgenommenen Pflanze. Die mindestens eine Pflanzenwurzel-Öffnung dient somit nicht nur der Bewässerung bzw. Entwässerung des Pflanzbehältnisses.

Die Pflanzanordnung gemäß dem Unteranspruch 15 erlaubt auch ein besonders sicheres Auffangen von von oben kommendem Wasser, das beispielsweise aus einem Bewässerungssystem kommt oder Regen ist. Dieses Wasser wird so oben an der Öffnungsrandzone zu der Seitenwandung bzw. zu der Pflanzöffnung bzw. zu der aufgenommenen Pflanze geführt.

Die Ausgestaltung gemäß dem Unteranspruch 16 führt zu einer besonders wirtschaftlichen Pflanzanordnung. Es ist von Vorteil, wenn die Pflanzbehältnisse in mindestens einer Reihe und/oder mindestens einer Spalte angeordnet sind. Insbesondere sind die Pflanzbehältnisse schachbrettartig angeordnet.

Nachfolgend wird unter Bezugnahme auf die beigefügte Zeichnung eine bevorzugte Ausführungsform der Erfindung beispielhaft beschrieben. Dabei zeigen:

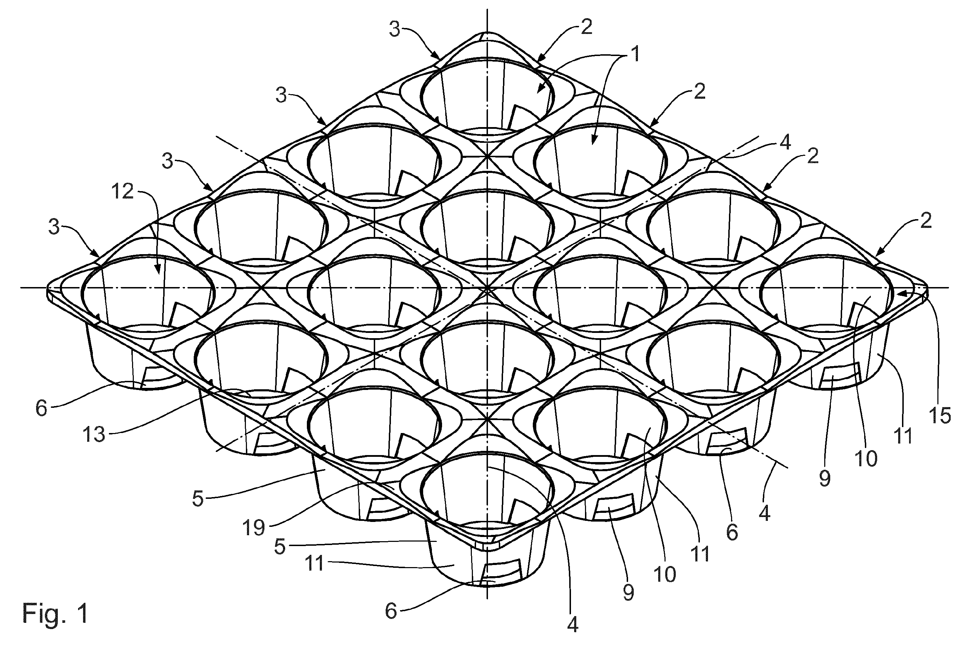

- Fig. 1: eine perspektivische Ansicht einer erfindungsgemäßen Pflanzanordnung,
- Fig. 2: eine Draufsicht auf die in Fig. 1 dargestellte Pflanzanordnung, wobei ein Teil der in Fig. 1 dargestellten Pflanzanordnung aus Erläuteningsgründen weggeschnitten ist,
- Fig. 3: einen Schnitt durch die Pflanzanordnung entlang der in Fig. 2 dargestellten Schnittlinie III-III, wobei vereinfacht auch ein aufgenommener Pflanztopf mit einer Pflanze eingezeichnet ist,

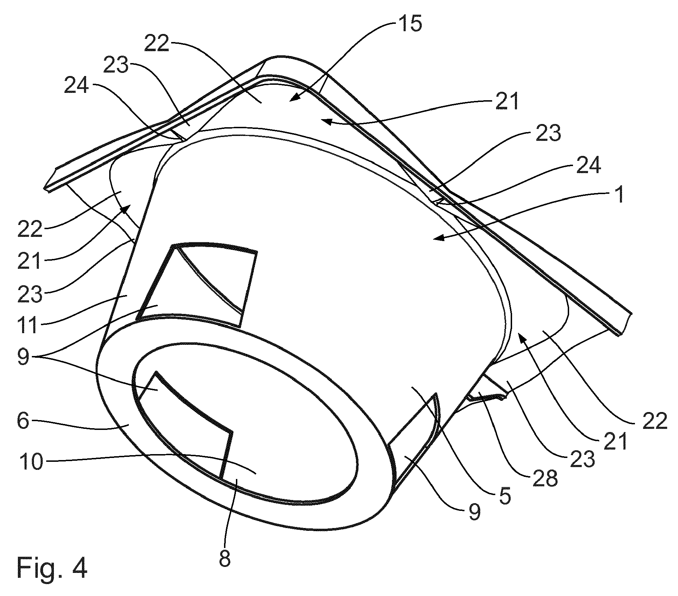

- Fig. 4: eine Teilansicht von unten der in Fig. 1 bis 3 dargestellten Pflanzanordnung, und
- Fig. 5: eine Teilansicht der in den Fig. 1 bis 4 dargestellten Pflanzanordnung, die einen Pflanztopf aufgenommen hat und deren Wirkungsweise veranschaulicht.

Eine in den Figuren dargestellte Pflanzanordnung ist ein einteiliges, tiefgezogenes Kunststoffteil. Diese umfasst gemäß der dargestellten Ausführungsform sechzehn Pflanzbehältnisse 1, die in vier Spalten 2 und vier Zeilen 3 nebeneinander angeordnet sind. Die Pflanzanordnung nimmt eine quadratische Grundform ein. Eine andere Anzahl an Pflanzbehältnissen 1 und/oder eine andere Anordnung derselben in der Pflanzanordnung ist alternativ möglich.

Die veranschaulichte Pflanzanordnung ist zu vier Pflanzanordnungs-Symmetrieebenen 4 symmetrisch ausgebildet. Zwei der Pflanzanordnungs-Symmetrieebenen 4 halbieren die Seiten der Pflanzanordnung, während die übrigen Pflanzanordnungs-Symmetrieebenen 4 Diagonalen der Pflanzanordnung bilden.

Die Pflanzbehältnisse 1 sind bei dieser Ausführungsform identisch. Jedes Pflanzbehältnis 1 hat eine Seitenwandung 5, die kegelstumpfmantelförmig ausgebildet ist und umfangsseitig im Wesentlichen geschlossen ist. Jede Seitenwandung 5 weist eine Innenseite 10 und eine Außenseite 11 auf.

Jedes Pflanzbehältnis 1 umfasst einen Boden 6, der sich unten an die jeweilige Seitenwandung 5 anschließt. Die Böden 6 liegen in einer gemeinsamen Ebene 7, die eine untere Pflanzanordnungs-Aufstellebene bildet.

Jeder Boden 6 ist von einer einzigen, kreisförmigen Pflanzenwurzel-Öffnung 8 durchsetzt, die in dem jeweiligen Boden 6 zentral angeordnet ist. Jeder Boden 6 ist durch einen Ringsteg gebildet.

Jede Seitenwandung 5 ist benachbart zu dem jeweiligen Boden 6 von mindestens einer, bevorzugter von mehreren, bevorzugter von drei, Entwässenmgs-Öffnungen 9 durchsetzt.

Jede Seitenwandung 5 und der sich an diese unten anschließende Boden 6 begrenzt einen Pflanzraum 12, der gemäß der dargestellten Ausführungsform kegelstumpfförmig ist und sich in Richtung auf den jeweiligen Boden 6 verjüngt.

Jeder Pflanzraum 12 ist von oben über eine obere, kreisförmige Pflanzöffnung 13 zugänglich, die parallel zu dem jeweiligen Boden 6 und oberhalb desselben verläuft. Die Pflanzöffnungen 13 liegen in einer gemeinsamen, oberen Pflanzöffnungs-Ebene 14. Die Fläche von jeder Pflanzenwurzel-Öffnung 8 beträgt in etwa 50 % der Fläche der benachbarten Pflanzöffnung 13.

An jede Seitenwandung 5 schließt sich oben benachbart zu der zugehörigen Pflanzöffnung 13 eine Öffnungsrandzone 15 an, die von dort nach seitlich außen vorspringt und die gesamte Pflanzöffnung 13 umgibt. Die Pflanzenbehältnisse 1 sind über die Öffnungsrandzonen 15 aneinander angeordnet bzw. miteinander verbunden. Die Öffnungsrandzonen 15 haben eine im Wesentlichen konstante Dicke D.

Jede Öffnungsrandzone 15 hat eine fiktive, quadratische Außenkontur und ist so durch vier fiktive Seitenränder 16, 17 begrenzt, die senkrecht zueinander verlaufen. Jede Öffnungsrandzone 15 hat so vier Eckbereiche 20. Jede Öffnungsrandzone 15 weist eine dem jeweiligen Boden 6 zugewandte Unterseite 18 und eine Oberseite 19 auf, die dem jeweiligen Boden 6 abgewandt ist bzw. gegenüberliegend zu dieser Unterseite 18 angeordnet ist.

Jede Öffnungsrandzone 15 hat an ihrer Unterseite 18 gegenüber der Pflanzöffnungs-Ebene 14 geneigte Kondenswasser-Führungszonen 21. Jede Kondenswasser-Führungszone 21 geht von dem benachbarten, zugehörigen Seitenrand 16 bzw. 17 aus. Jede Öffnungsrandzone 15 hat vier Kondens-wasser-Führungszonen 21, die in Umfangsrichtung um die jeweilige Pflanzöffnung 13 angeordnet sind und sich somit im Wesentlichen in den Eckbereichen 20 der Öffnungsrandzone 15 befinden.

Jede Kondenswasser-Führungszone 21 wiederum hat einen unteren Kondenswasser-Führungsflügel 22. Jeder Kondenswasser-Führungsflügel 22 erstreckt sich beabstandet von den Seitenrändern 16, 17 bis zu der zugehörigen Seitenwandung 5. Jeder Kondenswasser-Führungsflügel 22 ist unten bezüglich der Pflanzanordnungs-Aufstellebene 7 konvex gekrümmt.

Ferner hat jede Kondenswasser-Führungszone 21 unten zwei Kondenswasser-Teil-Führungsflanken, die sich senkrecht zueinander und entlang der Seitenränder 16 bzw. 17 erstrecken. Die sich entlang eines Seitenrands 16 bzw. 17 erstreckenden Kondenswasser-Teil-Führungsflanken bilden zusammen jeweilige Kondenswasser-Führungsflanken 23. Jede Kondenswasser-Führungsflanke 23 hat eine durchschnittliche Breite B, die zwischen 2 mm und 15 mm, bevorzugter zwischen 4 mm und 10 mm, liegt. Die Kondenswasser-Führungsflanken 23 umgeben zusammen die benachbarte Pflanzöffnung 13.

Die Kondenswasser-Führungsflanken 23 bilden an der Unterseite 18 mittig, also wo die Kondenswasser-Teil-Führungsflanken benachbarter Kondenswasser-Führungszonen 21 aufeinandertreffen, eine untere Knickstelle 24 aus. Im Bereich der Knickstellen 24 grenzen die Kondenswasser-Fühningsflanken 23 außenseitig an die Seitenwandung 5 an. Dort sind die Kondenswasser-Führungsflügel 22 voneinander getrennt. Zumindest im Bereich der Knickstellen 24 sind die Kondenswasser-Führungsflanken 23 zu der jeweiligen Pflanzöffnung 13 hin abfallend.

Von zwei der Knickstellen 24 pro Öffnungsrandzone 15 springt jeweils ein Stapelsteg 28 nach unten vor, der sich außen an die benachbarte Seitenwandung 5 anschließt und beim Stapeln der Pflanzanordnungen einen Stapelabstand zwischen diesen vorgibt.

Die Oberseite 19 von jeder Öffnungsrandzone 15 ist entsprechend der gegenüberliegenden Unterseite 18 geformt. Gegenüberliegend zu den Kondenswasser-Führungsflügeln 22 liegen so Sammelflügel 25 vor, die bezüglich der Pflanzanordnungs-Aufstellebene 7 konkav gekrümmt sind. Gegenüberliegend zu den Kondenswasser-Führungsflanken 23 liegen Sammelflanken 26 vor, die zumindest bereichsweise zu der Pflanzöffnung 13 hin abfallen.

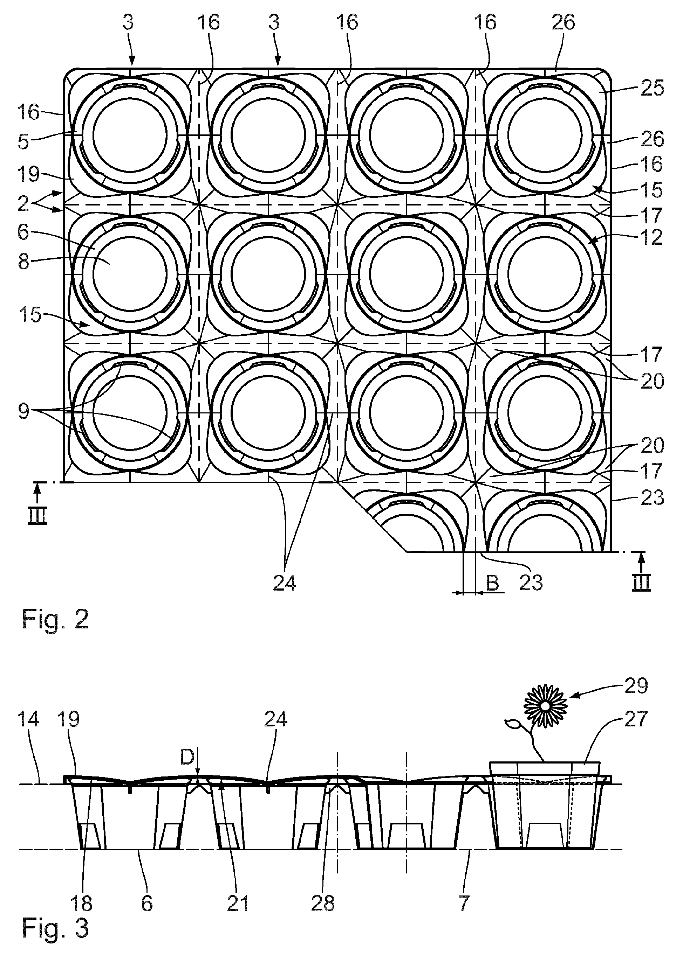

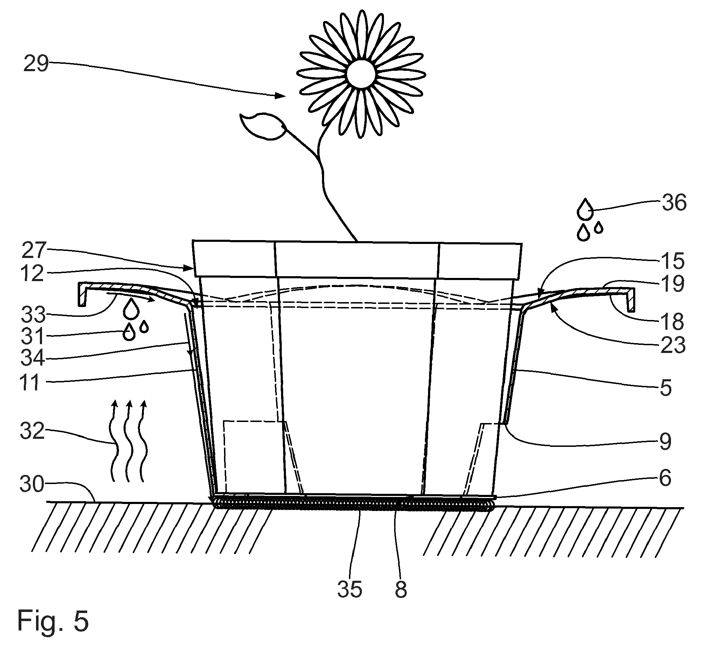

Nachfolgend wird die Pflanzanordnung im Einsatz beschrieben. Die Pflanzanordnung steht mit ihren Böden 6 auf einem Kulturboden 30. Zwischen der Pflanzanordnung und dem Kulturboden 30 kann sich eine gelochte Folie befinden. In jedem Pflanzenbehältnis 1 bzw. in jedem Pflanzraum 12 ist ein einziger Pflanztopf 27 aufgenommen, der über die zugehörige Pflanzöffnung 13 von oben in den jeweiligen Pflanzraum 12 eingeführt worden ist. Der Einfachheit halber ist in Fig. 3 exemplarisch nur ein vereinfachter Pflanztopf 27 eingezeichnet. Auch Fig. 5 zeigt die Anordnung eines Pflanztopfs 27 in der Pflanzanordnung. Die Pflanztöpfe 27 stehen oben auf dem jeweiligen Boden 6 und verschließen so im Wesentlichen die in diesem Boden 6 angeordnete Pflanzenwurzel-Öffnung 8. Der Pflanztopf 27 kann dabei zumindest bereichsweise an der Innenseite 10 der entsprechenden Seitenwandung 5 anliegen. Die Pflanztöpfe 27 stehen vorzugsweise gegenüber der benachbarten Pflanzöffnung 13 nach oben über. In jedem Pflanztopf 27 befindet sich eine Pflanze 29 oder mehrere Pflanzen 29.

Die Öffnungsrandzonen 15 verlaufen beabstandet zu dem Kulturboden 30 bzw. dem Untergrund. Nachdem die Pflanzanordnung über die Öffnungsrandzonen 15 im Wesentlichen geschlossen ist und quasi den Kulturboden 30 bzw. Untergrund nach oben vollständig bedeckt, ist eine Wasserverdunstung des Kulturbodens bzw. des Untergrunds stark reduziert. An der Unterseite 18 der Öffnungsrandzonen 15 schlägt sich Kondenswasser bzw. Tau 31 nieder, sobald wasserdampfhaltige Luft dort unter Taupunkt abgekühlt wird. Dies ist in Fig. 5 durch die Pfeile 32 veranschaulicht, die das Aufsteigen des Kondenswassers bzw. des Taus 31 zeigen.

Das Kondenswasser 31 gelangt dann über die Kondenswasser-Führungsflanken 23 insbesondere zu den benachbarten Knickstellen 24 und wird dort von diesen und/oder von den Stapelstegen 28 an die Außenseite 11 der jeweiligen Seitenwandung 5 abgegeben. Ferner gelangt das Kondenswasser 31 über die Kondenswasser-Führungsflügel 22 zu der Außenseite 11 der jeweiligen Seitenwandung 5. Beide Wasserwege sind in Fig. 5 vereinfacht durch den einzigen Zuführpfeil 33 symbolisiert.

Das Kondenswasser 31 läuft dann direkt außenseitig an der Seitenwandung 5 nach unten in Richtung auf die Pflanzanordnungs-Aufstellebene 7 bzw. die jeweilige Pflanzenwurzel-Öffnung 8, was durch den Strömungspfeil 34 veranschaulicht ist.

Die die Pflanzenwurzel-Öffnungen 8 durchdringenden Wurzel 35 der in den Pflanztöpfen 27 aufgenommenen Pflanzen 29 nehmen dann das zugeführte Kondenswasser 31 außerhalb des jeweiligen Pflanzraums 12 auf. Ferner wird das Kondenswasser 31 über Kapillarwirkung von unten über die Pflanzenwurzel-Öffnungen 8 in den jeweiligen Pflanzraum 12 gesaugt. Die Wurzel 35 der Pflanzen 29 erstrecken sich nach einer Wachstumsphase von der jeweiligen Pflanzenwurzel-Öffnung 8 im Wesentlichen bis zu der benachbarten Seitenwandung 5. Das Wurzelwachstum erfolgt innerhalb des Kulturbodens 30 bevorzugt zunächst in seitliche Richtung und erst dann in Tiefenrichtung. Das Kondenswasser 31 kann so über die Wurzel 35 von der Pflanze 29 besonders gut aufgenommen werden.

Überschüssiges Wasser kann den jeweiligen Pflanzraum 12 über die jeweiligen Entwässerungs-Öffnungen 9 verlassen.

Niederschlagswasser bzw. Gießwasser 36 wird außerdem günstigerweise über die Sammelflügel 25 und die Sammelflanken 26 der Öffnungsrandzonen 15 von oben in den jeweiligen Pflanzraum 12 bzw. zu der jeweils aufgenommenen Pflanze 29 geführt.

## Patentansprüche

1. Pflanzanordnung,
a) mit mindestens einem Pflanzbehältnis (1), das aufweist
i) eine obere Pflanzöffnung (13),
ii) einen von der Pflanzöffnung (13) ausgehenden Pflanzraum (12) zum Aufnehmen von einem Pflanztopf (27) mit einer in diesen eingesetzten Pflanze (29), wobei der Pflanzraum (12) seitlich durch eine, eine Innenseite (10) und eine Außenseite (11) aufweisende Seitenwandung (5) begrenzt ist, und
iii) mindestens eine Pflanzenwurzel-Öffnung (8) zur Durchsetzung von mindestens einer Wurzel (35) der Pflanze (29), und
b) mit einer, an dem mindestens einen Pflanzbehältnis (1) benachbart zu dessen Pflanzöffnung (13) einstückig angeformten, die Pflanzöffnung (13) umgebenden und nach seitlich außen vorspringenden Öffnungsrandzone (15), wobei die Öffnungsrandzone (15) aufweist i) eine zu der mindestens einen Pflanzenwurzel-Öffnung (8) weisende Unterseite (18),
- wobei an der Unterseite (18) der Öffnungsrandzone (15) mindestens eine Kondenswasser-Führungszone (21) ausgebildet ist, die gegenüber einer Pflanzanordnungs-Aufstellebene (7) zur Führung von Kondenswasser (31) von der mindestens einen Kondenswasser-Führungszone (21) zu der Außenseite (11) der Seitenwandung (5) zur Weiterleitung des Kondenswassers (31) nach unten in Richtung auf die mindestens eine Pflanzenwurzel-Öffnung (8) zur Versorgung der Pflanze (29) mit dem Kondenswasser (31) geneigt ist.

2. Pflanzanordnung nach Anspruch 1, **dadurch gekennzeichnet, dass** die mindestens eine Kondenswasser-Führungszone (21) mindestens einen Kondenswasser-Führungsflügel (22) aufweist, der zu der Seitenwandung (5) hin abfällt und vorzugsweise zumindest bereichsweise an die Seitenwandung (5) angrenzt.

3. Pflanzanordnung nach Anspruch 2, **dadurch gekennzeichnet, dass** die Öffnungsrandzone (15) eine eckige Außenkontur (16, 17) aufweist und der mindestens eine Kondenswasser-Führungsflügel (22) in mindestens einem Eckbereich (20) der Öffnungsrandzone (15) angeordnet ist.

4. Pflanzanordnung nach Anspruch 2 oder 3, **dadurch gekennzeichnet, dass** der mindestens eine Kondenswasser-Führungsflügel (22) bezüglich der Pflanzanordnungs-Aufstellebene (7) an der Unterseite (18) zumindest bereichsweise gekrümmt ist.

5. Pflanzanordnung nach einem der vorherigen Ansprüche, **dadurch gekennzeichnet, dass** die mindestens eine Kondenswasser-Führungszone (21) mindestens eine Kondenswasser-Führungsflanke (23) und die Öffnungsrandzone (15) mindestens einen Seitenrand (16, 17) aufweist, wobei die mindestens eine Kondenswasser-Führungsflanke (23) zumindest bereichsweise entlang des mindestens einen Seitenrands (16, 17) der Öffnungsrandzone (15) verläuft.

6. Pflanzanordnung nach Anspruch 5, **dadurch gekennzeichnet, dass** die mindestens eine Kondenswasser-Führungsflanke (23) mindestens eine an die Seitenwandung (5) angrenzende Kondenswasser-Übergabestelle (24) zur Übergabe des Kondenswassers (31) an die Seitenwandung (5) aufweist.

7. Pflanzanordnung nach Anspruch 6, **dadurch gekennzeichnet, dass** die mindestens eine Kondenswasser-Führungsflanke (23) eine Längserstreckung aufweist, wobei die mindestens eine Kondenswasser-Übergabestelle (24) an der mindestens einen Kondenswasser-Führungsflanke (23) in deren mittleren Bereich bezüglich der Längserstreckung der mindestens einen Kondenswasser-Führungsflanke (23) angeordnet ist.

8. Pflanzanordnung nach Anspruch 6 oder 7, **dadurch gekennzeichnet, dass** die mindestens eine Kondenswasser-Führungsflanke (23) an der mindestens einen Kondenswasser-Übergabestelle (24) als untere Knickstelle ausgebildet ist.

9. Pflanzanordnung nach einem der Ansprüche 6 bis 8, **dadurch gekennzeichnet, dass** zumindest im Bereich der mindestens einen Kondenswasser-Übergabestelle (24) die mindestens eine Kondenswasser-Führungsflanke (23) zu der Seitenwandung (5) hin abfällt.

10. Pflanzanordnung nach einem der Ansprüche 5 bis 9, **dadurch gekennzeichnet, dass** die mindestens eine Kondenswasser-Führungsflanke (23) eine durchschnittliche Breite (B) aufweist, die zwischen 2 mm und 15 mm, bevorzugter zwischen 4 mm und 10 mm, liegt.

11. Pflanzanordnung nach einem der Ansprüche 5 bis 10, **dadurch gekennzeichnet, dass** die Öffnungsrandzone (15) vier jeweils im rechten Winkel zueinander angeordnete Kondenswasser-Führungsflanken (23) aufweist.

12. Pflanzanordnung nach Anspruch 8 und 11, **dadurch gekennzeichnet, dass** von mindestens einer der Kondenswasser-Führungsflanken (23) bei der Knickstelle (24) ein Stapelsteg (28) nach unten vorspringt.

13. Pflanzanordnung nach einem der Ansprüche 2 bis 4 und einem der Ansprüche 5 bis 12, **dadurch gekennzeichnet, dass** sich der mindestens eine Kondenswasser-Führungsflügel (22) zwischen der Seitenwandung (5) und der mindestens einen Kondenswasser-Führungsflanke (23) erstreckt.

14. Pflanzanordnung nach einem der vorherigen Ansprüche, **dadurch gekennzeichnet, dass** bei jedem Pflanzbehältnis (1) die mindestens eine Pflanzenwurzel-Öffnung (8) insgesamt eine Fläche einnimmt, die zwischen 30 % und 70 % einer Fläche der oberen Pflanzöffnung (13) liegt, wobei vorzugsweise genau eine, insbesondere zentral angeordnete, Pflanzenwurzel-Öffnung (8) in jedem Pflanzbehältnis (1) vorhanden ist.

15. Pflanzanordnung nach einem der vorherigen Ansprüche, **dadurch gekennzeichnet, dass** die Öffnungsrandzone (15) eine im Wesentlichen konstante Dicke (D) und eine Oberseite (19) aufweist, wobei die Oberseite (19) der Öffnungsrandzone (15) im Wesentlichen entsprechend der Unterseite (18) der Öffnungsrandzone (15) geformt ist.

16. Pflanzanordnung nach einem der vorherigen Ansprüche, **gekennzeichnet durch** mehrere der Pflanzbehältnisse (1), die nebeneinander angeordnet und über ihre Öffnungsrandzonen (15) miteinander verbunden sind.
